# EUROPEAN PATENT SPECIFICATION

(11) **EP 3 169 118 B1**
(45) Date of publication and mention of the grant of the patent: **25.03.2020**
(21) Application number: 15818504.1
(22) Date of filing: 27.05.2015
(51) Int. Cl.: H04W 52/38, H04W 72/04, H04W 74/08

(54) **USER TERMINAL AND WIRELESS COMMUNICATION METHOD**
BENUTZERENDGERÄT UND DRAHTLOSKOMMUNIKATIONSVERFAHREN
TERMINAL D'UTILISATEUR ET PROCÉDÉ DE COMMUNICATION SANS FIL

(30) Priority: 11.07.2014 JP 2014143219
(43) Date of publication of application: 17.05.2017
(73) Proprietor: NTT DOCOMO, INC., Chiyoda-ku Tokyo 100-6150 (JP)
(72) Inventor: TAKEDA, Kazuki, Tokyo 100-6150 (JP); UCHINO, Tooru, Tokyo 100-6150 (JP); NAGATA, Satoshi, Tokyo 100-6150 (JP)
(74) Representative: Hoffmann Eitle
(86) International application number: PCT/JP2015/065161
(87) International publication number: WO 2016/006345

(56) References cited:
- WO-A1-2013/073787
- US-A1- 2013 058 315
- NTT DOCOMO: "Power-control mechanisms for dual connectivity", 3GPP DRAFT; R1-142264, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789381, Retrieved from the Internet: URL:http://www.3gpp.org/ftp/Meetings_3GPP_ SYNC/RAN1/RAN1/Docs/ [retrieved on 2014-05-18]
- NTT DOCOMO: "Summary of email discussion [76b-08]", 3GPP DRAFT; R1-142263, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789380, Retrieved from the Internet: URL:http://www.3gpp.org/ftp/Meetings_3GPP_ SYNC/RAN1/RAN1/Docs/ [retrieved on 2014-05-18]
- NTT DOCOMO: 'Power -control mechanisms for dual connectivity' 3GPP TSG-RAN WG1#77 RL-142264 19 May 2014, XP050789381
- ZTE: 'Physical layer aspects for Dual Connectivity' 3GPP TSG-RAN WG1#77 RL-142216 19 May 2014, XP050787812

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1).

In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Successor systems of LTE -- referred to as, for example, "LTE-advanced" or "LTE enhancement" -- have been under study for the purpose of achieving further broadbandization and increased speed beyond LTE, and the specifications thereof have been drafted as LTE Rel. 10/11.

Also, the system band of LTE Rel. 10/11 includes at least one component carrier (CC), where the LTE system band constitutes one unit. Such bundling of a plurality of CCs into a wide band is referred to as "carrier aggregation" (CA).

In LTE Rel. 12, which is a more advanced successor system of LTE, various scenarios to use a plurality of cells in different frequency bands (carriers) are under study. When the radio base stations to form a plurality of cells are substantially the same, the above-described carrier aggregation is applicable. On the other hand, when the radio base stations to form a plurality of cells are completely different, dual connectivity (DC) may be employed.

Non-Patent Literature 2 describes power-control mechanisms for dual connectivity, especially power determination of PRACH. It is considered that PCell PRACH transmission has the highest priority.

Non-Patent Literature 3 describes that since PRACH coverage to MeNB may need to be protected, our view is that PRACH should not be restricted by maximum power per eNB configuration in this case.

Patent Literature 1 suggests introducing a power scaling for uplink PRACH transmissions performing RACH procedures on an uplink component carrier. The power scaling is proposed on the basis of a prioritization among multiple uplink transmissions or on the basis of the uplink component carriers on which RACH procedures are performed.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP contribution R1-142264 by NTT Docomo
Non-Patent Literature 3: 3GPP contribution R1-142263 by NTT Docomo

Patent Literature 1: US 2013/058315 A1

### Summary of Invention

### Technical Problem

In dual connectivity, no rule is set forth as to how to allocate power to the PRACH, which is transmitted in random access.

The present invention has been made in view of the above, and it is therefore an object of the present invention to provide a user terminal and a radio communication method that make it possible to allocate power to the PRACH adequately in dual connectivity.

### Solution to Problem

This object is accomplished by the subject-matter of the independent claims. The dependent claims concern particular embodiments.

The embodiments, aspects and/or examples of the following description which are not covered by the appended claims are considered as not being part of the present invention.

### Advantageous Effects of Invention

According to the present invention, power can be adequately allocated to the PRACH in dual connectivity.

### Brief Description of Drawings

FIG. 1 is a diagram to show an overview of random access;
FIGs. 2 provide diagrams to show communication between radio base stations and a user terminal in carrier aggregation and dual connectivity;
FIG. 3 is a diagram to explain random access in dual connectivity;
FIGs. 4 provide diagrams to explain transmission power control in dual connectivity;
FIGs. 5 provide diagrams to explain the configuration of the maximum transmission power of the PRACH in a master cell group;
FIG. 6 is a diagram to explain a fallback to non-dual connectivity power control;
FIG. 7 is a diagram to explain another example of a fallback to non-dual connectivity power control;
FIG. 8 is a diagram to show an example of a schematic structure of a radio communication system according to the present embodiment;
FIG. 9 is a diagram to show an example of an overall structure of a radio base station according to the present embodiment;
FIG. 10 is a diagram to show an example of a functional structure of a radio base station according to the present embodiment;
FIG. 11 is a diagram to show an example of an overall structure of a user terminal according to the present embodiment; and
FIG. 12 is a diagram to show an example of a functional structure of a user terminal according to the present embodiment.

### Description of Embodiments

Now, an embodiment of the present invention will be described below in detail with reference to the accompanying drawings. In LTE systems, random access is made by transmitting an uplink physical random access channel (PRACH) when establishing initial connection, when establishing synchronization, when resuming communication, and so on. Random access can be classified into two types -- namely, the contention-based type and the non-contention-based type.

In contention-based random access, user terminals transmit preambles, which are selected randomly from a plurality of random access preambles (contention preambles) prepared within a cell, by using the PRACH. In this case, there is a possibility that the user terminals might use the same random access preamble and create contention.

In non-contention-based random access, user terminals transmit UE-specific random access preambles (dedicated preambles), which are allocated by the network in advance, by using the PRACH. In this case, contention is not created because different random access preambles are assigned between the user terminals.

Contention-based random access is used when establishing initial connection, when starting or resuming uplink communication, and so on. Non-contention-based random access is used when conducting a handover, when starting or resuming downlink communication, and so on.

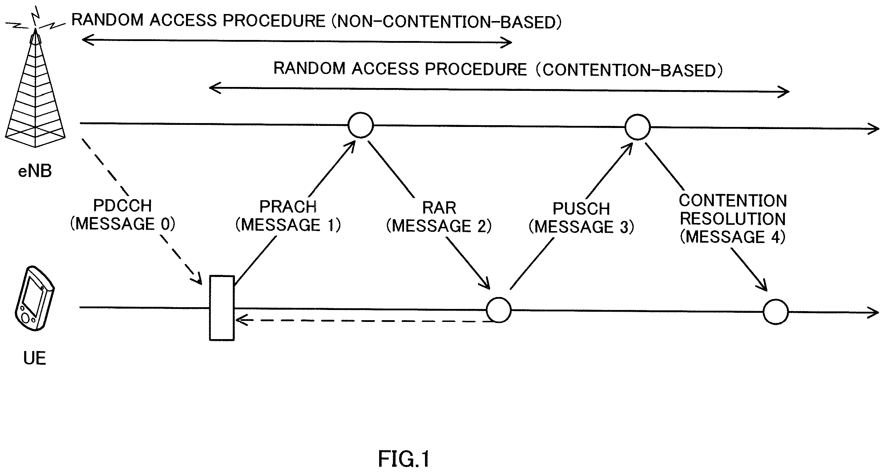

FIG. 1 shows an overview of random access. Contention-based random access is comprised of step 1 to step 4, and non-contention-based random access is comprised of step 0 to step 2.

In contention-based random access, first, a user terminal UE transmits a random access preamble (PRACH) by using the PRACH resource that is configured in the residing cell (message 1). The radio base station eNB, upon detecting the random access preamble, transmits a random access response (RAR), which is information in response to that (message 2). After having transmitted the random access preamble, the user terminal UE tries to receive the random access response (message 2) during a predetermined period. When the user terminal fails to receive message 2, the user terminal raises the transmission power of the PRACH and transmits message 1 again.

The user terminal UE, when receiving the random access response, transmits a data signal (message 3) by using the physical uplink shared channel (PUSCH) that is specified by an uplink scheduling grant included in the random access response. The radio base station eNB, upon receiving a scheduled message, transmits a contention resolution message to the user terminal UE (message 4). The user terminal UE identifies the radio base station eNB by establishing synchronization using messages 1 to 4, and thereupon completes the random access procedure and establishes connection.

In the event of non-contention-based random access, first, the radio base station eNB transmits a physical downlink control channel (PDCCH) to command the user terminal UE to transmit the PRACH (message 0). The user terminal UE transmits a random access preamble (PRACH) at the timing specified by the PDCCH (message 1). The radio base station eNB, upon detecting the random access preamble, transmits a random access response (RAR), which is information in response to that (message 2). The user terminal completes the non-contention-based random access procedure upon receipt of message 2. Note that, as in contention-based random access, when the user terminal fails to receive message 2, the user terminal raises the transmission power of the PRACH and transmits message 1 again.

In LTE-A systems, a HetNet (Heterogeneous Network), in which small cells, each having a local coverage area of a radius of approximately several tens of meters, are formed within a macro cell having a wide coverage area of a radius of approximately several kilometers, is under study. Carrier aggregation and dual connectivity are applicable to HetNet structures.

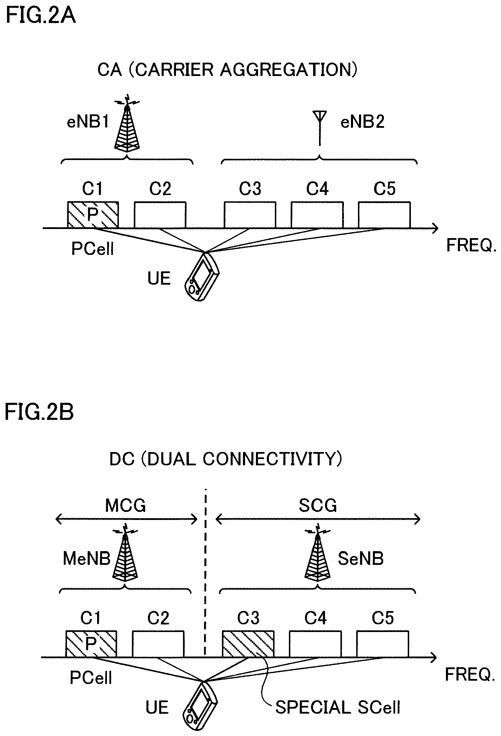

FIG. 2A shows communication between radio base stations and a user terminal that are engaged in carrier aggregation. In the example shown in FIG. 2A, the radio base station eNB1 is a radio base station to form a macro cell (hereinafter referred to as the "macro base station"), and the radio base station eNB2 is a radio base station to form a small cell (hereinafter referred to as the "small base station"). For example, the small base station may be structured like an RRH (Remote Radio Head) that connects with the macro base station.

When carrier aggregation is employed, one scheduler (for example, a scheduler provided in the macro base station eNB1) controls the scheduling of multiple cells. In a structure in which a scheduler provided in the macro base station eNB1 controls the scheduling of multiple cells, each radio base station may be connected by using, for example, an ideal backhaul that provides a high-speed channel such as optical fiber.

FIG. 2B shows communication between radio base stations and a user terminal that are engaged in dual connectivity. When dual connectivity is employed, a plurality of schedulers are provided separately, and these multiple schedulers (for example, a scheduler provided in the radio base station MeNB and a scheduler provided in the radio base station SeNB) each control the scheduling of one or more cells they have control over. In a structure in which a scheduler provided in the radio base station MeNB and a scheduler provided in the radio base station SeNB each control the scheduling of one or more cells they have control over, each radio base station may be connected by using, for example, a non-ideal backhaul that produces substantial delays, such as the X2 interface.

As shown in FIG. 2B, in dual connectivity, each radio base station configures a cell group (CG) that is comprised of one cell or a plurality of cells. Each cell group is comprised of one or more cells formed by the same radio base station, or one or more cells formed by the same transmission point such as a transmitting antenna apparatus, a transmission station and so on.

The cell group to include the PCell will be referred to as the "master cell group" (MCG), and the cell group that is not the master cell group will be referred to as the "secondary cell group" (SCG). The total number of cells to constitute the master cell group and the secondary cell group is configured to be equal to or less than a predetermined value (for example, five cells).

The radio base station where the master cell group is configured will be referred to as the "master base station" (MeNB: Master eNB), and the radio base station where the secondary cell group is configured will be referred to as the "secondary base station" (SeNB: Secondary eNB).

Dual connectivity does not presume tight cooperation between radio base stations that is equivalent to that used in carrier aggregation. Consequently, the user terminal executes downlink L1/L2 control (PDCCH/EPDCCH) and uplink L1/L2 control (UCI (Uplink Control Information) feedback through the PUCCH/PUSCH) on a per cell group basis. Consequently, the secondary base station, too, needs a special SCell that has equal functions to those of the PCell such as common search space, the PUCCH and so on. In the present description, a special SCell having equal functions to those of the PCell will be also referred to as a "PSCell"

### (Primary Secondary Cell).

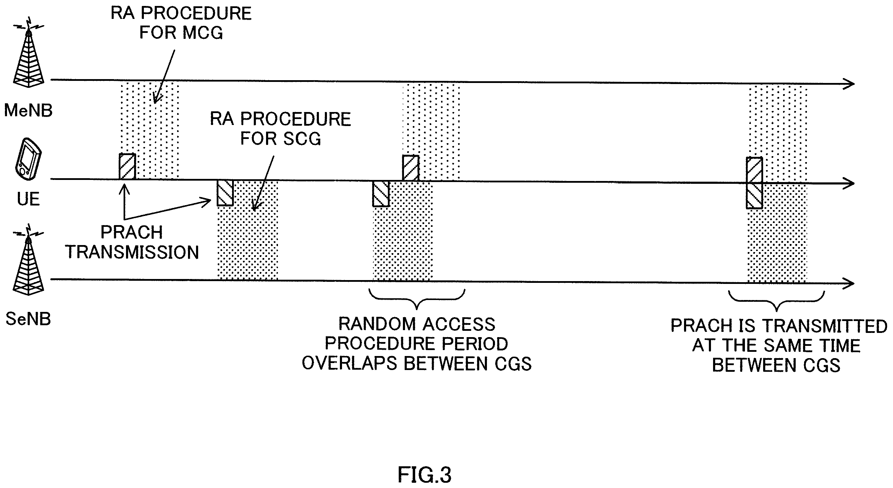

Dual connectivity supports random access in both the master cell group and the secondary cell group. As shown in FIG. 3, random access procedure periods are provided in both the master cell group and the secondary cell group. The user terminal UE transmits the PRACH in these periods.

In the master cell group, the PCell supports both contention-based random access and non-contention-based random access, and SCells of a sTAG (secondary Timing Advance Group) support non-contention-based random access alone. In the secondary cell group, the PSCell supports both contention-based random access and non-contention-based random access, and SCells of a sTAG support non-contention-based random access alone.

Random access can be carried out in parallel in the master cell group and in the secondary cell group as long as the power-limited state is not assumed. Here, the power-limited state refers to the state in which, at a timing a user terminal tries to make a transmission, the maximum transmission power is already reached from the perspective of at least one of the serving cell, the TAG, the cell group and this UE. For example, as shown in FIG. 3, cell groups may have overlapping random access procedure periods. Also, as shown in FIG. 3, cell groups may transmit PRACHs at the same time.

In dual connectivity, the master base station MeNB and the secondary base station SeNB each carry out scheduling independently, and therefore transmission power control to adjust the transmission power dynamically within a range in which the sum of the user terminal's transmission power for the master base station MeNB and the secondary base station SeNB does not exceed the maximum possible transmission power is difficult. When the sum of the transmission power that is required exceeds the user terminal's maximum possible transmission power, the user terminal performs the process of scaling down the power (power scaling) or dropping part or all of the channels or the signals (dropping) until the sum of the transmission power that is required assumes a value not exceeding the maximum possible transmission power.

Since, in dual connectivity, neither the master base station MeNB nor the secondary base station SeNB is able to know what power control the counterpart radio base station (the secondary base station SeNB for the master base station MeNB and the master base station MeNB for the secondary base station SeNB) is using, there is a fear that the timings and frequency these power scaling and/or dropping may be applied cannot be predicted. When power scaling and/or dropping are applied in a way that is unpredicted in the master base station MeNB and the secondary base station SeNB, uplink communication can no longer be executed properly, which then raises a fear of a significant deterioration of the quality of communication, throughput and so on.

So, dual connectivity introduces the concept of "guaranteed transmission power" (minimum guaranteed power) per cell group, at least to PUCCH/PUSCH transmission. Assume that the guaranteed transmission power for the master cell group (MCG) is P_{MeNB}, and the guaranteed transmission power for the secondary cell group (SCG) is P_{SeNB}. The master base station MeNB or the secondary base station SeNB reports one or both of the guaranteed transmission power P_{MeNB} and P_{SeNB} to the user terminal through higher layer signaling such as RRC signaling. In particular, when there is no signaling or command, the user terminal has only to understand that the guaranteed transmission power P_{MeNB} =0 and/or P_{SeNB} =0.

When a transmission request arrives from the radio base station MeNB -- that is, when a PUCCH/PUSCH transmission is triggered by an uplink grant or by RRC -- the user terminal calculates the transmission power for the master cell group (MCG), and, if the transmission power to be required (required power) is equal to or lower than the guaranteed transmission power P_{MeNB}, determines that this required power is the transmission power for the master cell group (MCG).

When a transmission request arrives from the secondary base station SeNB -- that is, when a PUCCH/PUSCH transmission is triggered by an uplink grant or by RRC -- the user terminal calculates the transmission power for the secondary group (SCG), and, if the transmission power to be required (required power) is equal to or lower than the guaranteed transmission power P_{SeNB}, determines that this required power is the transmission power for the secondary cell group (SCG).

When the power required for the radio base station xeNB (either the master base station MeNB or the secondary base station SeNB) exceeds the guaranteed transmission power P_{xeNB} (either the guaranteed transmission power P_{MeNB} or P_{SeNB}), the user terminal might control the transmission power to be equal to lower than the guaranteed transmission power P_{xeNB}, depending on conditions. To be more specific, when the sum of the power required for the master cell group and the secondary cell group shows a threat of exceeding the user terminal's maximum possible transmission power P_{CMAX}, the user terminal applies power scaling and/or drops the channels or signals, with respect to the cell group where the power in request exceeds the guaranteed transmission power P_{xeNB}. As a result of this, when the transmission power equals or falls below the guaranteed transmission power P_{xeNB}, power scaling and/or dropping of channels or signals are applied no more.

That is, at least the guaranteed transmission power P_{MeNB} or P_{SeNB} is guaranteed for the maximum transmission power for the PUCCH/PUSCH in dual connectivity. However, depending on the allocation of other cell groups and the implementation of the user terminal, cases might occur where the guaranteed transmission power P_{MeNB} or P_{SeNB} is not guaranteed for the maximum transmission power of the PUCCH/PUSCH.

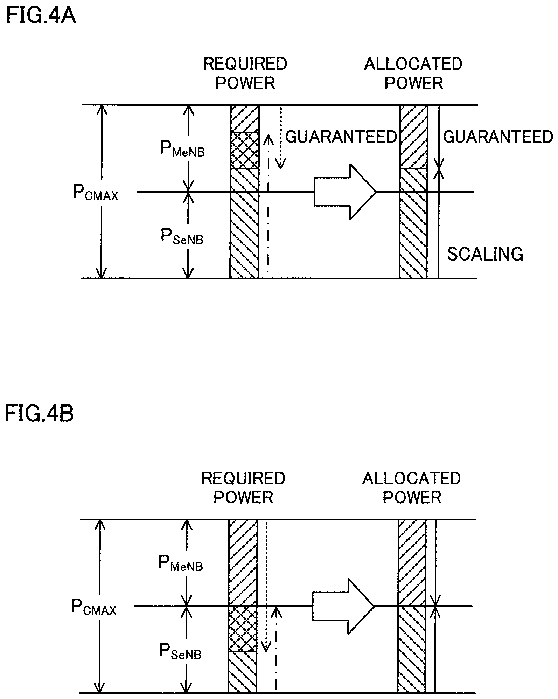

In the example shown in FIG. 4A, the master base station MeNB requests power that is equal to or lower than the guaranteed transmission power P_{MeNB}, and the secondary base station SeNB requests power beyond the guaranteed transmission power P_{SeNB}. The user terminal checks whether or not the total sum of the CC-specific transmission power does not exceed the guaranteed transmission power P_{MeNB} and P_{SeNB} in the master cell group and in the secondary cell group, and whether or not the total sum of the transmission power of all CCs in both cell groups does not exceed the maximum possible transmission power P_{CMAX}.

In the example shown in FIG. 4A, the total sum of the transmission power of all CCs in both cell groups exceeds the maximum possible transmission power P_{CMAX}, so that the user terminal applies power scaling or dropping. While the total sum of the CC-specific transmission power in the master cell group does not exceed the guaranteed transmission power P_{MeNB}, the total sum of the CC-specific transmission power in the secondary cell group exceeds the guaranteed transmission power P_{SeNB}, so that the user terminal allocates the required power to the master cell group as transmission power, and allocates the rest of the power (the extra power that is left after the master cell group's transmission power is subtracted from the maximum possible transmission power P_{CMAX}) to the secondary cell group. The user terminal sees this remaining power as the maximum possible transmission power for the secondary cell group, and applies power scaling or dropping to the secondary cell group.

In the example shown in FIG. 4B, power to exceed the guaranteed transmission power P_{MeNB} is requested from the master base station, and power that is equal to lower than the guaranteed transmission power P_{SeNB} is requested from the secondary base station. The total sum of the transmission power of all CCs in both cell groups exceeds the maximum possible transmission power P_{CMAX}, so that the user terminal applies power scaling or dropping.

In the example shown in FIG. 4B, while the total sum of the CC-specific transmission power in the master cell group does not exceed the guaranteed transmission power P_{MeNB}, the total sum of the CC-specific transmission power in the secondary cell group exceeds the guaranteed transmission power P_{SeNB}, so that the user terminal allocates the required power to the master cell group as transmission power, and allocates the rest of the power (the extra power that is left after the master cell group's transmission power is subtracted from the maximum possible transmission power P_{CMAX}) to the secondary cell group. The user terminal sees this remaining power as the maximum possible transmission power for the secondary cell group, and applies power scaling or dropping to the secondary cell group.

For the rules for applying power scaling and dropping described above, the rules set forth in Rel. 10/11 can be applied. Rel. 10/11 sets forth the rules of power scaling and/or dropping for when there are concurrent transmissions in a plurality of CCs during CA and for when the required transmission power of all CCs exceeds the maximum possible transmission power P_{CMAX} per user terminal. By using the above-noted remaining power (the extra power that is left after the master cell group's transmission power is subtracted from the maximum possible transmission power P_{CMAX}) as the maximum possible transmission power and the transmission power that is required in this cell group as the required transmission power, it is possible to apply power scaling and/or dropping to this cell group based on the rules set forth in Rel. 10/11. These can be made possible with mechanisms that have been set forth heretofore, so that the user terminal can easily realize transmission power control and the rules of power scaling and/or dropping by re-cycling existing mechanisms, without introducing new mechanisms.

In non-dual connectivity (non-DC), the maximum transmission power of the PRACH is the user terminal's maximum possible transmission power P_{CMAX},_{c} per CC. Also, there is a rule to allocate transmission power to the PRACH with the highest priority if the PRACH is going to be transmitted simultaneously with the PUCCH, the PUSCH or the SRS (Sounding Reference Signal) while carrier aggregation is employed. For example, when the PRACH and the PUCCH/PUSCH are going to be transmitted at the same time and the transmission power exceeds the maximum allowable transmission power P_{CMAX}, the user terminal scales the transmission power of the PUCCH/PUSCH until the actual transmission power assumes a value that does not exceed P_{CMAX}. Also, when the PRACH and the SRS are going to be transmitted at the same time and the transmission power exceeds the maximum possible transmission power P_{CMAX}, the user terminal drops the SRS so that the actual transmission power does not exceed P_{CMAX}.

Note that, in the event of carrier aggregation, if random access occurs in two or more different TAGs at the same time, the user terminal makes random access in either one of them. Consequently, cases cannot occur where two or more PRACHs are transmitted at the same time.

On the other hand, dual connectivity sets forth no rules as to how to allocate power to the PRACH. First, there is a problem as to what value the maximum transmission power of the PRACH should be configured to. Also, another problem has to do with how the priority rules should be configured when PRACHs are transmitted at the same time in two cell groups, or when a given cell group's PRACH and another cell group's PUCCH, PUSCH or SRS are transmitted at the same time.

By contrast with this, the present inventors have studied the fact that guaranteed transmission power is configured for PUCCH/PUSCH transmissions in dual connectivity, and arrived at a structure to configure the maximum transmission power of the PRACH.

Considering that guaranteed transmission power P_{MeNB} or P_{SeNB} is configured for the maximum transmission power for the PUCCH/PUSCH, the maximum transmission power of the PRACH may be configured in the following four patterns.

(1) The maximum transmission power for the PRACH is P_{CMAX},_{c}. That is, regardless of the value of the guaranteed transmission power P_{MeNB} or P_{SeNB}, the PRACH assumes the same maximum transmission power value as when dual connectivity is not employed. In this case, there is a possibility that the PRACH of a given cell group and the PUCCH/PUSCH of another cell group are transmitted at the same time and become power-limited. At this time, transmission power has to be preferentially allocated to the PRACH regardless of the value of the guaranteed transmission power in the other group. By so doing, a PRACH coverage that is substantially equal to that of when carrier aggregation or a single carrier is used can be secured.

(2) The maximum transmission power of the PRACH is min{P_{CMAX},_{c}, P_{MeNB(SeNB)}}. Here, P_{MeNB(SeNB)} is the guaranteed power in the cell group where the PRACH is triggered. In this case, only the area where power is guaranteed for the PUCCH/PUSCH -- that is, the area where reliable dual connectivity is possible -- becomes the PRACH coverage. However, when P_{MeNB} + P_{SeNB} < P_{CMAX} holds, it is not possible to secure a sufficient coverage.

(3) The maximum transmission power of the PRACH is min{P_{CMAX},_{c}, P_{CMAX} - P_{SeNB(MeNB)}}. Here, P_{CMAX} - P_{SeNB(MeNB)} represents the power that is left after the guaranteed power in another cell group where the PRACH is not triggered is subtracted from the maximum transmission power with which the user terminal can carry out transmission. In this case, it is possible to guarantee the other cell group's guaranteed transmission power, and, furthermore, secure a comparatively wide coverage. Also, when P_{MeNB} + P_{SeNB} < P_{CMAX} holds, a wide coverage can be secured compared to above (2).

(4) The maximum transmission power of the PRACH is configured separately in a higher layer. In this case, the maximum transmission power of the PRACH is equal to or lower than P_{CMAX},_{c}. The higher layer parameter to configure the maximum transmission power of the PRACH may configure the same value as the guaranteed transmission power P_{MeNB} or P_{SeNB} of the PUCCH/PUSCH, or may configure a different value. The transmission power that is required for proper receipt in the radio base station varies between the PUCCH/PUSCH and the PRACH. Consequently, by configuring the maximum transmission power separately with a higher layer parameter, it is possible to maintain above (1) to (3), and, furthermore, achieve flexibility to configure a different value for the PRACH from that of the PUCCH/PUSCH.

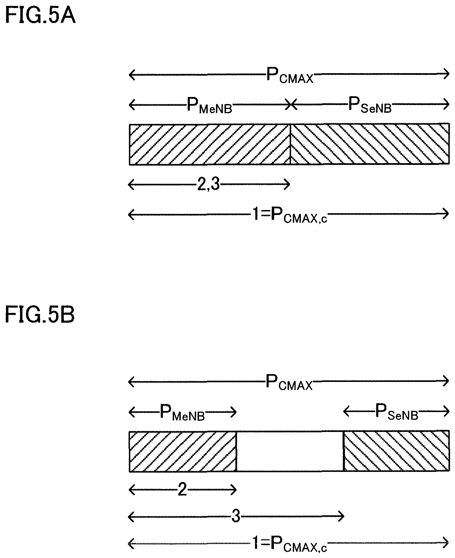

FIGs. 5 provide diagrams to explain the configuration of the maximum transmission power for the PRACH in the master cell group. FIG. 5A shows a case where P_{MeNB} + P_{SeNB} = P_{CMAX} holds, and FIG. 5B shows a case where P_{MeNB} + P_{SeNB} < P_{CMAX} holds.

As shown in FIG. 5A, when P_{MeNB} + P_{SeNB} = P_{CMAX} holds, the maximum transmission power for the PRACH in above (2) and (3) is P_{MeNB}. The maximum transmission power for the PRACH in above (1) is P_{CMAX},_{c}(=P_{CMAX}).

As shown in FIG. 5B, when P_{MeNB} + P_{SeNB} < P_{CMAX} holds, the maximum transmission power for the PRACH in above (2) is P_{MeNB}. The maximum transmission power for the PRACH in above (3) is P_{CMAX} - P_{SeNB}. The maximum transmission power for the PRACH in above (1) is P_{CMAX},_{c}(=P_{CMAX}).

Note that the maximum transmission power of the PRACH may be the same or different between the PRACH of the master cell group and the PRACH of the secondary cell group. For example, the PRACH of the master cell group may assume the value of above (1) for its maximum transmission power, and the PRACH of the secondary cell group may assume the value of one of above (2) to (4) as its maximum transmission power.

When a random access failure repeats a predetermined number of times in the PCell of the master cell group, the user terminal detects a radio link failure and moves on to the re-connection procedure. Since the re-connection procedure is a re-do of initial connection and others, and, if this occurs frequently, the user throughput deteriorates significantly. Consequently, by making the maximum transmission power of the master cell group have the value of above (1), it is possible to reduce the possibility that the re-connection procedure occurs. On the other hand, when a random access failure occurs in the secondary cell group and the user terminal detects the radio link failure, the user terminal reports the occurrence of the radio link failure to the network through the master cell group, but nevertheless does not perform the re-connection procedure. Consequently, by making the PRACH of the secondary cell group have the value of one of above (2) to (4), it is possible to keep the guaranteed transmission power configured for the PUCCH/PUSCH of the master cell group.

In the case of above (1), the coverage of the PRACH is up to the area where the quality of the PUCCH or the PUSCH cannot be guaranteed. Consequently, although random access succeeds, an area where dual connectivity cannot be implemented with predetermined quality is produced.

In the case of above (2), (3) or (4), the coverage of the PRACH becomes smaller, and the dual connectivity area becomes smaller than that of carrier aggregation.

If, when the PRACH is transmitted, another cell group's guaranteed transmission power is guaranteed as with the PUCCH/PUSCH, the coverage of the PRACH becomes smaller, and the possibility of a radio link failure increases. On the other hand, if the maximum transmission power of the PRACH is made P_{CMAX},_{c}, although the possibility of a radio link failure can be reduced with random access, the dual connectivity area stretches to the area where the quality of the PUCCH/PUSCH cannot be guaranteed, and the quality of dual connectivity deteriorates.

When adequate power control for the PRACH or the PUCCH/PUSCH is not possible -- that is, when one of these is always or frequently power-limited -- it is likely that dual connectivity should not be employed because sufficient performance cannot be expected. Meanwhile, as noted earlier, if the transmission power of the PRACH is limited, a radio link failure is more likely to occur, which then results in a need for re-connection, and in deteriorated performance.

So, when the required transmission power that is for the PRACH in the master cell group exceeds the value of one of above (1) to (4), the user terminal may not carry out uplink transmission for the secondary cell group after that. Alternatively, the user terminal may operate not to fulfill the quality requirement set forth in the specification on the uplink of the secondary cell group.

In this case, after the transmission power that is required for the PRACH in the master cell group exceeds the value of one of above (1) to (4), the user terminal no longer takes uplink transmission for the secondary cell group into consideration, and operates to fulfill the transmission power and the quality requirement for the master cell group. Consequently, it is possible to allocate power to uplink transmission for the master cell group up to the maximum transmission power, regardless of the value of the guaranteed transmission power P_{SeNB}. In this case, in the master cell group, the maximum transmission power for uplink transmission is P_{CMAX},_{c} per CC and P_{CMAX} per user terminal. That is, the transmission power control is the same as when carrier aggregation or non-carrier aggregation is applied and the secondary cell group is not configured is used.

After the transmission power that is required for the PRACH in the master cell group exceeds the value of one of above (1) to (4), the user terminal may secure the uplink quality and power of the master cell group, using whatever means. For example, the user terminal may stop the uplink of the secondary cell group, or may not secure the quality of the waveform of uplink signals that are produced in the secondary cell group.

After the transmission power that is required for the PRACH in the master cell group exceeds the value of one of above (1) to (4), the radio base station SeNB, where the secondary cell group is configured, becomes unable to properly receive the uplink signals transmitted from the user terminal to the secondary cell group. By this means, the radio base station SeNB can recognize that the user terminal does not fulfill the quality to maintain dual connectivity. This can be seen as a fallback from dual connectivity to non-dual connectivity.

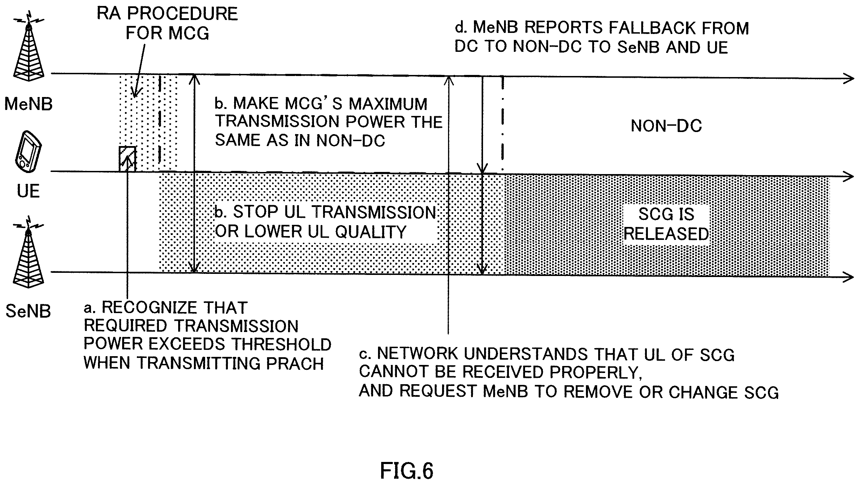

The fallback to non-dual connectivity power control will be described with reference to FIG. 6. (a) In the random access procedure period for the master cell group, the user terminal UE recognizes that the transmission power in request exceeds the value of one of above (1) to (4) when transmitting the PRACH. (b) The user terminal UE stops uplink transmission for the secondary cell group or lowers the uplink quality, and allocates the maximum transmission power to the master cell group in the same way as in non-dual connectivity. (c) The uplink quality of the secondary cell group becomes poor, so that the secondary cell group side can recognize the deterioration of quality. After that, the network side, too, recognizes that the uplink of the secondary cell group cannot be received adequately, and requests the master base station MeNB to remove or change the secondary cell group. By this means, the master base station MeNB can start a fallback from dual connectivity to non-dual connectivity. (d) The master base station MeNB reports the fallback from dual connectivity to non-dual connectivity to the secondary base station SeNB and to the user terminal UE. After that, the master base station MeNB falls back to non-dual connectivity, and the secondary cell group is released.

According to this operation, new signaling and/or interaction between radio base stations are not necessary, and power control on the user terminal side alone enables a fallback to non-dual connectivity. Also, even when the power-limited state is assumed, it is not necessary to detect radio link failures on the master cell group side, so that it is possible to keep the deterioration of performance to a minimum.

The user terminal operation to stop uplink transmission for the secondary cell group may be thought as stopping transmissions scheduled in the PDCCH or the EPDCCH, or as stopping transmissions (CSI (Channel State Information), the SR (Scheduling Request) or the SRS) configured in higher layers.

When stopping transmissions scheduled in the PDCCH or the EPDCCH, the user terminal may ignore DL assignments and UL grants in the secondary cell group. That is, the user terminal may not detect DL assignments and UL grants in the secondary cell group. Alternatively, the user terminal may discard the DL assignment and UL grant detection results in the secondary cell group.

When stopping transmissions (CSI, the SR or the SRS) configured in higher layers, the user terminal may make the TA timers of all TAGs in the secondary cell group expire or consider these to be expired. Alternatively, the user terminal may de-activate all cells in the secondary cell group or judge that these are de-activated. Alternatively, the user terminal may detect radio link failures in the secondary cell group or consider radio link failures to be detected for the secondary cell group.

The user terminal operation not to fulfill the uplink quality requirement of the secondary cell group may continue transmissions themselves, but lower the transmission power to request. In this case, the user terminal may carry out transmission with power that is so low that the transmission power in request is not fulfilled. Alternatively, the user terminal may dismiss the requirement to keep the transmission power fixed within the subframe.

If the fallback to non-dual connectivity is too sensitive, it becomes difficult to achieve dual connectivity gain. For example, there is a possibility that dual connectivity falls back to non-dual connectivity due to the instability of path loss estimation by the user terminal.

So, when the PRACH is retransmitted a predetermined number of times in the master cell group, it is possible to stop uplink transmission for the secondary cell group, or lower its quality. The predetermined number of times may be a count that is determined in advance, or may be a parameter provided by higher layer signaling.

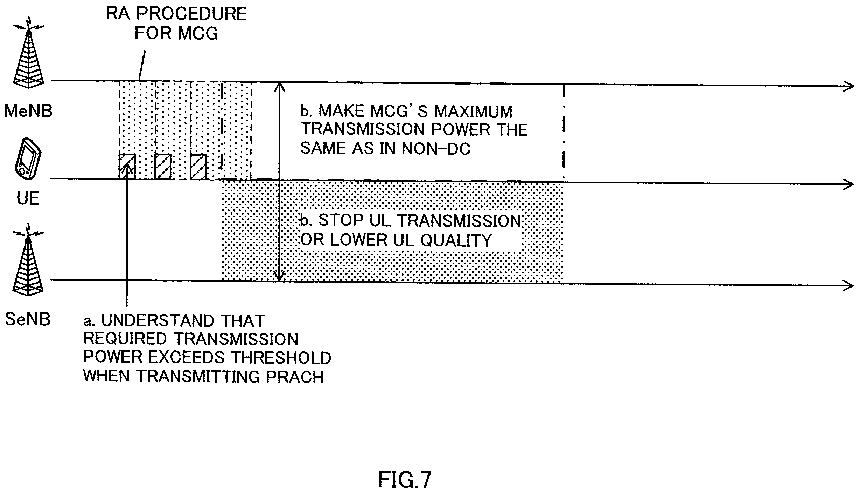

In the example shown in FIG. 7, the user terminal performs operation (b) when the PRACH is retransmitted three times.

By making PRACH retransmissions a condition for a fallback to non-dual connectivity by the user terminal, in addition to the power-limited state of the PRACH, it is possible to prevent a fallback to non-dual connectivity from occurring too often.

The example in which the user terminal falls back to non-dual connectivity by stopping uplink transmission for the secondary cell group is by no means limiting, and an example to detect abnormal power on the network side and command the user terminal to stop uplink transmission for the secondary cell group is also possible.

The master base station, following information that is transmitted in the uplink of the master cell group -- for example, PHR (Power Head Room) -- learns that power can run short in the uplink of the secondary cell group. Then, the master base station commands the user terminal to stop uplink transmission for the secondary cell group.

The user terminal, upon receiving the command from the master base station, may discontinue uplink transmission for the secondary cell group after that, or may judge that the request needs not be met, and controls power so that the maximum transmission power per CC becomes P_{CMAX},_{c} and the maximum transmission power per user terminal becomes P_{CMAX} in the uplink of the master cell group.

The master base station commands the secondary base station to stop scheduling the secondary cell group. The secondary base station, upon receiving the command from the master base station, stops the scheduling after that.

According to the method described above, it is possible to easily support fallback to non-dual connectivity power control without providing new network signaling and so on.

### (Structure of Radio Communication System)

Now, the structure of the radio communication system according to the present embodiment will be described below. In this radio communication system, a radio communication method to use the above-described power control is employed.

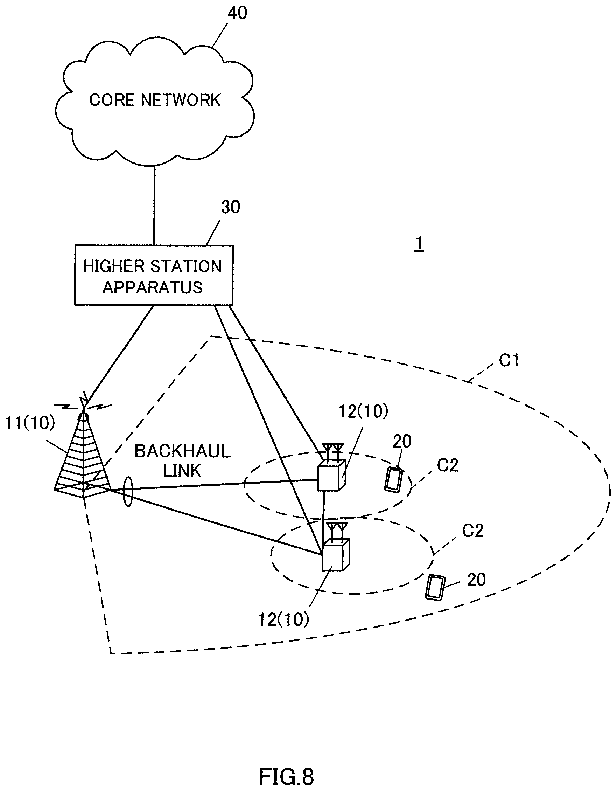

FIG. 8 is a schematic structure diagram to show an example of the radio communication system according to the present embodiment. As shown in FIG. 8, a radio communication system 1 is comprised of a plurality of radio base stations 10 (11 and 12), and a plurality of user terminals 20 that are present within cells formed by each radio base station 10, and that are configured to be capable of communicating with each radio base station 10. The radio base stations 10 are each connected with a higher station apparatus 30, and are connected to a core network 40 via the higher station apparatus 30.

In FIG. 8, the radio base station 11 is, for example, a macro base station having a relatively wide coverage, and forms a macro cell C1. The radio base stations 12 are, for example, small base stations having local coverages, and form small cells C2. Note that the number of radio base stations 11 and 12 is not limited to that shown in FIG. 8.

In the macro cell C1 and the small cells C2, the same frequency band may be used, or different frequency bands may be used. Also, the radio base stations 11 and 12 are connected with each other via an inter-base station interface (for example, optical fiber, the X2 interface, etc.).

Between the radio base station 11 and the radio base stations 12, between the radio base station 11 and other radio base stations 11, or between the radio base stations 12 and other radio base stations 12, dual connectivity mode (DC) or carrier aggregation (CA) is employed.

The user terminals 20 are terminals to support various communication schemes such as LTE, LTE-A and so on, and may include both mobile communication terminals and stationary communication terminals. The user terminals 20 can communicate with other user terminals 20 via the radio base stations 10.

Note that the higher station apparatus 30 may be, for example, an access gateway apparatus, a radio network controller (RNC), a mobility management entity (MME) and so on, but is by no means limited to these.

In the radio communication system 1, a downlink shared channel (PDSCH: Physical Downlink Shared Channel), which is used by each user terminal 20 on a shared basis, downlink control channels (PDCCH (Physical Downlink Control Channel), EPDCCH (Enhanced Physical Downlink Control Channel), etc.), a broadcast channel (PBCH) and so on are used as downlink channels. User data, higher layer control information and predetermined SIBs (System Information Blocks) are communicated in the PDSCH. Downlink control information (DCI) is communicated by the PDCCH and the EPDCCH.

Also, in the radio communication system 1, an uplink shared channel (PUSCH: Physical Uplink Shared Channel), which is used by each user terminal 20 on a shared basis, and an uplink control channel (PUCCH: Physical Uplink Control Channel) are used as uplink channels. User data and higher layer control information are communicated by the PUSCH.

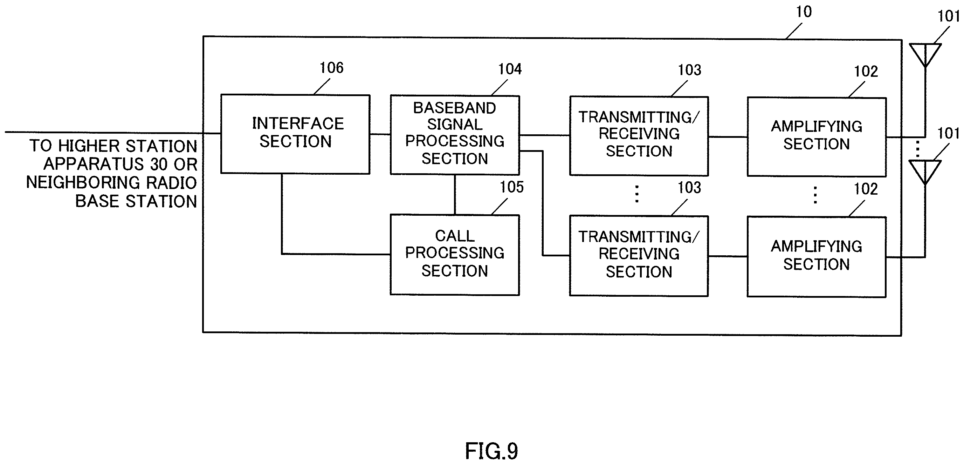

FIG. 9 is a diagram to show an overall structure of a radio base station 10 according to the present embodiment. As shown in FIG. 9, the radio base station 10 has a plurality of transmitting/receiving antennas 101 for MIMO communication, amplifying sections 102, transmitting/receiving sections (transmitting section and receiving section) 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts the downlink signals, pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101. For the transmitting/receiving sections 103, transmitters/receivers, transmitting/receiving circuits or transmitting/receiving devices that can be described based on common understanding of the technical field to which the present invention pertains can be used.

On the other hand, as for uplink signals, radio frequency signals that are received in the transmitting/receiving antennas 101 are each amplified in the amplifying sections 102, converted into baseband signals through frequency conversion in each transmitting/receiving section 103, and input in the baseband signal processing section 104.

The transmitting/receiving sections 103 receive the PRACH transmitted from the user terminal.

n the baseband signal processing section 104, the user data that is included in the input uplink signals is subjected to an FFT process, an IDFT process, error correction decoding, a MAC retransmission control receiving process and RLC layer and PDCP layer receiving processes, and the result is forwarded to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, the X2 interface, etc.). Alternatively, the interface section 106 transmits and receives signals to and from the higher station apparatus 30 via a predetermined interface.

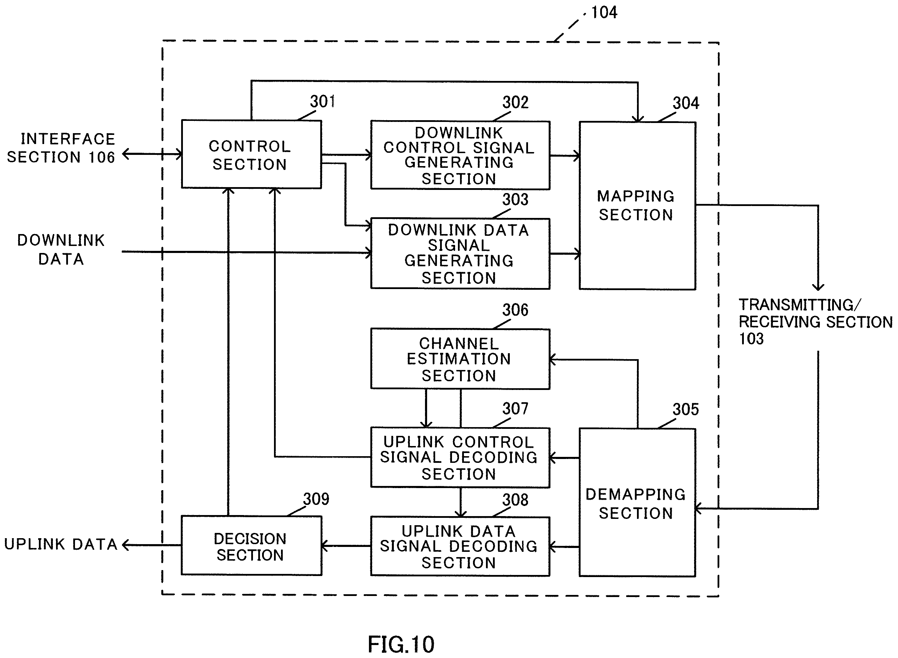

FIG. 10 is a diagram to show a principle functional structure of the baseband signal processing section 104 provided in the radio base station 10 according to the present embodiment. As shown in FIG. 10, the baseband signal processing section 104 provided in the radio base station 10 is comprised at least of a control section 301, a downlink control signal generating section 302, a downlink data signal generating section 303, a mapping section 304, a demapping section 305, a channel estimation section 306, an uplink control signal decoding section 307, an uplink data signal decoding section 308 and a decision section 309.

The control section 301 controls the scheduling of downlink user data that is transmitted in the PDSCH, downlink control information that is transmitted in one or both of the PDCCH and the enhanced PDCCH (EPDCCH), downlink reference signals and so on. Also, the control section 301 controls the scheduling of random access preambles communicated in the PRACH, uplink data that is communicated in the PUSCH, uplink control information that is communicated in the PUCCH or the PUSCH, and uplink reference signals (allocation control). Information about the allocation control of uplink signals (uplink control signals, uplink user data, etc.) is reported to the user terminals 20 by using a downlink control signal (DCI).

The control section 301 controls the allocation of radio resources to downlink signals and uplink signals based on command information from the higher station apparatus 30, feedback information from each user terminal 20, and so on. That is, the control section 301 functions as a scheduler. For the control section 301, a controller, a control circuit or a control device that can be described based on common understanding of the technical field to which the present invention pertains can be used.

The downlink control signal generating section 302 generates downlink control signals (which may be both PDCCH signals and EPDCCH signals, or may be one of these) that are determined to be allocated by the control section 301. To be more specific, the downlink control signal generating section 302 generates downlink assignments, which report downlink signal allocation information, and uplink grants, which report uplink signal allocation information, based on commands from the control section 301. For the downlink control signal generating section 302, a signal generator or a signal generating circuit that can be described based on common understanding of the technical field to which the present invention pertains can be used.

The downlink data signal generating section 303 generates downlink data signals (PDSCH signals) that are determined to be allocated to resources by the control section 301. The data signals that are generated in the data signal generating section 303 are subjected to a coding process and a modulation process, based on coding rates and modulation schemes that are determined based on CSI from each user terminal 20 and so on.

The mapping section 304 controls the allocation of the downlink control signals generated in the downlink control signal generating section 302 and the downlink data signals generated in the downlink data signal generating section 303 to radio resources based on commands from the control section 301. For the mapping section 304, a mapping circuit or a mapper that can be described based on common understanding of the technical field to which the present invention pertains can be used.

The demapping section 305 demaps the uplink signals transmitted from the user terminals 20 and separates the uplink signals. The channel estimation section 306 estimates channel states from the reference signals included in the received signals separated in the demapping section 305, and outputs the estimated channel states to the uplink control signal decoding section 307 and the uplink data signal decoding section 308.

The uplink control signal decoding section 307 decodes the feedback signals (delivery acknowledgement signals and/or the like) transmitted from the user terminals in the uplink control channel (PRACH, PUCCH, etc.), and outputs the results to the control section 301. The uplink data signal decoding section 308 decodes the uplink data signals transmitted from the user terminals through an uplink shared channel (PUSCH), and outputs the results to the decision section 309. The decision section 309 makes retransmission control decisions (A/N decisions) based on the decoding results in the uplink data signal decoding section 308, and outputs the results to the control section 301.

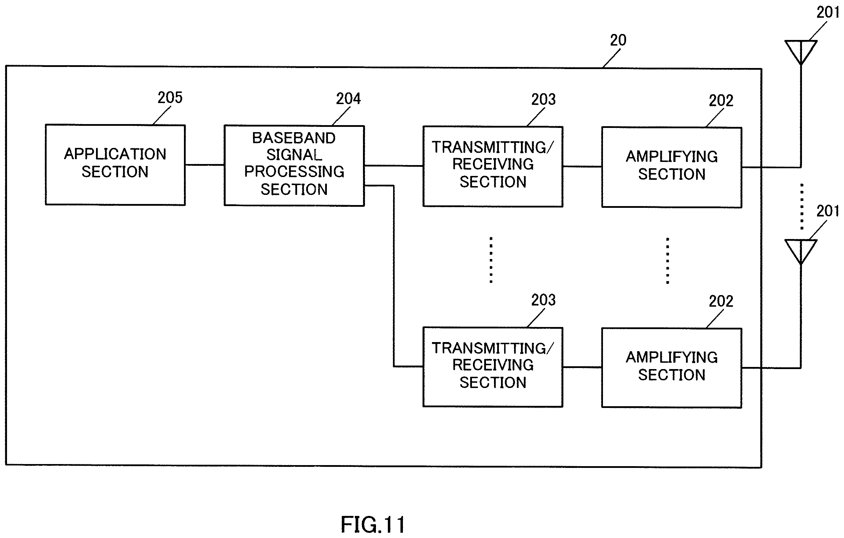

FIG. 11 is a diagram to show an overall structure of a user terminal 20 according to the present embodiment. As shown in FIG. 11, the user terminal 20 has a plurality of transmitting/receiving antennas 201 for MIMO communication, amplifying sections 202, transmitting/receiving sections (transmitting section and receiving section) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process and so on in the baseband signal processing section 204. In this downlink data, downlink user data is forwarded to the application section 205. The application section 205 performs processes related to higher layers above the physical layer and the MAC layer, and so on. Furthermore, in the downlink data, broadcast information is also forwarded to the application section 205. For the transmitting/receiving sections 203, transmitters/receivers, transmitting/receiving circuits or transmitting/receiving devices that can be described based on common understanding of the technical field to which the present invention pertains can be used.

Meanwhile, uplink user data is input from the application section 205 to the baseband signal processing section 204. In the baseband signal processing section 204, a retransmission control (HARQ: Hybrid ARQ) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

The transmitting/receiving sections 203 transmit the physical random access channel (PRACH) in the random access procedure.

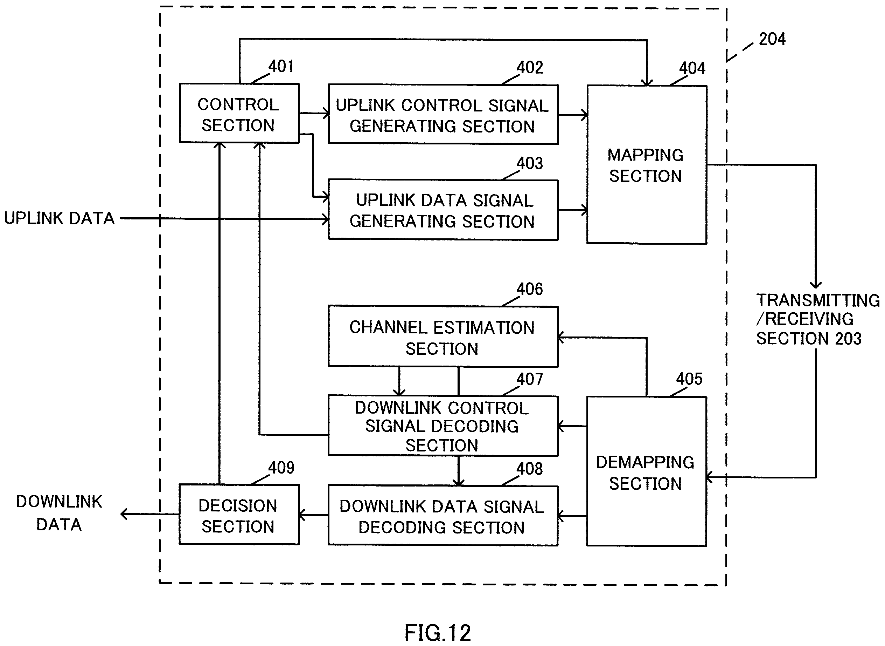

FIG. 12 is a diagram to show a principle functional structure of the baseband signal processing section 204 provided in the user terminal 20. As shown in FIG. 12, the baseband signal processing section 204 provided in the user terminal 20 is comprised at least of a control section 401, an uplink control signal generating section 402, an uplink data signal generating section 403, a mapping section 404, a demapping section 405, a channel estimation section 406, a downlink control signal decoding section 407, a downlink data signal decoding section 408 and a decision section 409.

The control section 401 controls the generation of uplink control signals (A/N signals, etc.), uplink data signals and so on, based on the downlink control signals (PDCCH signals) transmitted from the radio base stations 10, retransmission control decisions in response to the PDSCH signals received, and so on. The downlink control signals received from the radio base stations are output from the downlink control signal decoding section 408, and the retransmission control decisions are output from the decision section 409. For the control section 401, a controller, a control circuit or a control device that can be described based on common understanding of the technical field to which the present invention pertains can be used.

The control section 401 functions as a power control section to execute power control for transmitting the PRACH. When the transmission power required for the PRACH to transmit to the master base station exceeds a threshold, the control section 401 applies control to stop uplink transmission to the secondary base station or lower the uplink quality.

The uplink control signal generating section 402 generates uplink control signals (feedback signals such as delivery acknowledgement signals, channel state information (CSI) and so on) based on commands from the control section 401. The uplink data signal generating section 403 generates uplink data signals based on commands from the control section 401. Note that, when an uplink grant is contained in a downlink control signal reported from the radio base station, the control section 401 commands the uplink data signal 403 to generate an uplink data signal. For the uplink control signal generating section 402, a signal generator or a signal generating circuit that can be described based on common understanding of the technical field to which the present invention pertains can be used.

The mapping section 404 controls the allocation of the uplink control signals (delivery acknowledgment signals and so on) and the uplink data signals to radio resources (PUCCH, PUSCH, etc.) based on commands from the control section 401.

The demapping section 405 demaps the downlink signals transmitted from the radio base station 10 and separates the downlink signals. The channel estimation section 406 estimates channel states from the reference signals included in the received signals separated in the demapping section 405, and outputs the estimated channel states to the downlink control signal decoding section 407 and the downlink data signal decoding section 408.

The downlink control signal decoding section 407 decodes the downlink control signal (PDCCH signal) transmitted in the downlink control channel (PDCCH), and outputs the scheduling information (information regarding the allocation to uplink resources) to the control section 401. Also, when information about the cell to feed back delivery acknowledgement signals to or information as to whether or not to apply RF tuning is included in a downlink control signal, these pieces of information are also output to the control section 401.

The downlink data signal decoding section 408 decodes the downlink data signals transmitted in the downlink shared channel (PDSCH), and outputs the results to the decision section 409. The decision section 409 makes retransmission control decisions (A/N decisions) based on the decoding results in the downlink data signal decoding section 408, and outputs the results to the control section 401.

Note that the present invention is by no means limited to the above embodiment and can be carried out with various changes. The sizes and shapes illustrated in the accompanying drawings in relationship to the above embodiment are by no means limiting, and may be changed as appropriate within the scope of optimizing the effects of the present invention. Besides, implementations with various appropriate changes may be possible without departing from the scope of the object of the present invention.

## Claims

1. A user terminal (20) that is configured with a plurality of cell groups, CGs, the user terminal comprising:
a transmission section (203) configured to perform physical random access channel, PRACH, transmission in a given CG; and
a control section (401),
wherein the control section is configured to perform scaling on the PUCCH/PUSCH transmission power in the other CG so that the total transmission power does not exceed the maximum possible transmission power, when the PRACH transmission in the given CG and a PUCCH/PUSCH transmission in another CG occur simultaneously, and a total transmission power exceeds a maximum possible transmission power, and
wherein the control section (401) is configured to assume that a radio link failure has been detected in a secondary CG, when the PRACH transmission in the given CG is repeated a given number of times.

2. The user terminal according to claim 1, wherein the control section (401) is configured to determine maximum transmission power of the PRACH transmission as a maximum possible transmission power value, P_{CMAX},_{c}, of the user terminal per cell, regardless of a guaranteed transmission power value of another CG.

3. A radio communication method for a user terminal configured with a plurality of cell groups, CGs, the radio communication method comprising:
performing physical random access channel, PRACH, transmission in a given CG;
when the PRACH transmission in the given CG and a PUCCH/PUSCH transmission in another CG occur simultaneously, and a total transmission power exceeds a maximum possible transmission power, performing scaling on the PUCCH/PUSCH transmission power in the other CG so that the total transmission power does not exceed the maximum possible transmission power, and
when the PRACH transmission in the given CG is repeated a given number of times, assuming that a radio link failure has been detected in a secondary CG.

## Patentansprüche

1. Benutzerendgerät (20), welches mit einer Vielzahl von Zellengruppen, CGs, konfiguriert ist, wobei das Benutzerendgerät umfasst:
einen Sendeabschnitt (203), welcher konfiguriert ist, um physikalisches Direktzugriffkanal-, PRACH-Senden in einer bestimmten CG durchzuführen; und
einen Steuerabschnitt (401),
wobei der Steuerabschnitt konfiguriert ist, um Skalieren auf der PUCCH/PUSCH-Übertragungsleistung in der anderen CG durchzuführen, sodass die gesamte Übertragungsleistung die maximal mögliche Übertragungsleistung nicht übersteigt, wenn das PRACH-Senden in der bestimmten CG und ein PUCCH/PUSCH-Senden in einer anderen CG gleichzeitig auftreten, und eine gesamte Übertragungsleistung eine maximal mögliche Übertragungsleistung übersteigt, und
wobei der Steuerabschnitt (401) konfiguriert ist, um anzunehmen, dass ein Funkverknüpfungsfehler in einer sekundären CG erkannt wurde, wenn das PRACH-Senden in der bestimmten CG eine bestimmte Anzahl von Malen wiederholt wird.

2. Benutzerendgerät nach Anspruch 1, wobei der Steuerabschnitt (401) konfiguriert ist, um maximale Übertragungsleistung des PRACH-Sendens als einen maximal möglichen Übertragungsleistungswert, P_{CMAX},_{c}, des Benutzerendgeräts pro Zelle unabhängig von einem garantierten Übertragungsleistungswert einer anderen CG zu bestimmen.

3. Funkkommunikationsverfahren für ein Benutzerendgerät, welches mit einer Vielzahl von Zellengruppen, CGs, konfiguriert ist, wobei das Funkkommunikationsverfahren umfasst:
Durchführen von physikalischem Direktzugriffkanal-, PRACH-Senden in einer bestimmten CG;
wenn das PRACH-Senden in der bestimmten CG und ein PUCCH/PUSCH-Senden in einer anderen CG gleichzeitig auftreten, und eine gesamte Übertragungsleistung eine maximal mögliche Übertragungsleistung übersteigt, Durchführen von Skalieren auf der PUCCH/PUSCH-Übertragungsleistung in der anderen CG, sodass die gesamte Übertragungsleistung die maximal mögliche Übertragungsleistung nicht übersteigt; und
wenn das PRACH-Senden in der bestimmten CG eine bestimmte Anzahl von Malen wiederholt wird, Annehmen, dass ein Funkverknüpfungsfehler in einer sekundären CG erkannt wurde.

## Revendications

1. Terminal utilisateur (20) qui est configuré avec une pluralité de groupes de cellules, GC, le terminal utilisateur comprenant :
une section de transmission (203) configurée pour réaliser une transmission de canal physique à accès aléatoire, PRACH, dans un GC donné ; et
une section de contrôle (401),
dans lequel la section de contrôle est configurée pour réaliser une régulation sur la puissance de la transmission PUCCH/PUSCH dans l'autre GC de sorte que la puissance de transmission totale ne dépasse pas la puissance de transmission maximale possible, lorsque la transmission PRACH dans le GC donné et une transmission PUCCH/PUSCH dans un autre GC se produisent simultanément, et qu'une puissance de transmission totale dépasse une puissance de transmission maximale possible, et
dans lequel la section de contrôle (401) est configurée pour supposer qu'un défaut de liaison radio a été détecté dans un GC secondaire, lorsque la transmission PRACH dans le GC donné est répétée un nombre donné de fois.

2. Terminal utilisateur selon la revendication 1, dans lequel la section de contrôle (401) est configurée pour déterminer une puissance de transmission maximale de la transmission PRACH en tant que valeur de puissance de transmission maximale possible, P_{CMAX},_{c}, du terminal utilisateur par cellule, indépendamment d'une valeur de puissance de transmission garantie d'un autre GC.

3. Procédé de communication radio pour un terminal utilisateur configuré avec une pluralité de groupes de cellules, GC, le procédé de communication radio comprenant :
la réalisation d'une transmission de canal physique à accès aléatoire, PRACH, dans un GC donné ;
lorsque la transmission PRACH dans le GC donné et une transmission PUCCH/PUSCH dans un autre GC se produisent simultanément, et qu'une puissance de transmission totale dépasse une puissance de transmission maximale possible, la réalisation d'une régulation sur la puissance de la transmission PUCCH/PUSCH dans l'autre GC de sorte que la puissance de transmission totale ne dépasse pas la puissance de transmission maximale possible, et
lorsque la transmission PRACH dans le GC donné est répétée un nombre donné de fois, la supposition qu'un défaut de liaison radio a été détecté dans un GC secondaire.
